# NEUE EUROPÄISCHE PATENTSCHRIFT

(11) **EP 3 136 886 B2**
(45) Veröffentlichungstag und Bekanntmachung des Hinweises auf die Entscheidung über den Einspruch: **08.06.2022**
(45) Hinweis auf die Patenterteilung: 25.04.2018
(21) Anmeldenummer: 15713748.0
(22) Anmeldetag: 31.03.2015
(51) Int. Cl.: A24F 40/40, H01M 50/216

(54) **RAUCHPRODUKT MIT EINER ELEKTRISCHEN ENERGIEQUELLE UND MINDESTENS EINER ELEKTRISCHEN FUNKTIONSEINHEIT**
SMOKING PRODUCT COMPRISING AN ELECTRICAL ENERGY SOURCE AND AT LEAST ONE ELECTRICAL FUNCTIONAL UNIT
PRODUIT À FUMER COMPRENANT UNE SOURCE D'ÉNERGIE ÉLECTRIQUE ET AU MOINS UNE UNITÉ FONCTIONNELLE ÉLECTRIQUE

(30) Priorität: 14.04.2014 DE 102014207154
(43) Veröffentlichungstag der Anmeldung: 08.03.2017
(60) Teilanmeldung: 18000166.1
(73) Patentinhaber: Hauni Maschinenbau GmbH, 21033 Hamburg (DE)
(72) Erfinder: SOLLMANN, Michael, 21465 Wentorf (DE); MÜLLER, Hans-Heinrich, 22113 Oststeinbek (DE); KESSLER, Marc, 22415 Hamburg (DE); JANZ, Dietmar, 22946 Trittau (DE)
(74) Vertreter: Eisenführ Speiser
(86) Internationale Anmeldenummer: PCT/EP2015/057094
(87) Internationale Veröffentlichungsnummer: WO 2015/158548

(56) Entgegenhaltungen:
- EP-A1- 0 274 173
- WO-A1-2013/089551
- WO-A1-2015/035510
- WO-A1-2015/122773
- WO-A2-2013/128198
- CA-A1- 2 882 773
- DE-U1-202012 101 880
- KR-U- 20110 008 931
- US-A1- 2006 016 453
- US-A1- 2011 226 236
- US-A1- 2011 304 282
- US-A1- 2012 138 340
- US-A1- 2013 056 013
- US-A1- 2013 167 854
- US-A1- 2013 192 615
- US-A1- 2014 060 554
- US-B1- 8 807 140

## Beschreibung

Die Erfindung betrifft ein Rauchprodukt mit einer elektrischen Energiequelle, mindestens einer elektrischen Funktionseinheit und einem Gehäuse, das gemeinsam die elektrische Energiequelle und die mindestens eine Funktionseinheit zumindest teilweise umhüllt.

Als ein derartiges Rauchprodukt wird zurzeit auf dem Markt eine sogenannte elektrische oder elektronische Zigarette oder Pfeife angeboten, welche als wichtige elektrische Funktionseinheiten mindestens einen Verdampfer mit einem zur Aufbewahrung mindestens eines Aromastoffes vorgesehenen Vorratsspeicher und ein Heizelement umfassen. Das Gehäuse bildet bei elektronischen Zigaretten oder Pfeifen eine feste Aufnahme und ist bevorzugt einer herkömmlichen Zigarette oder Pfeife nachempfunden, indem beispielsweise im Falle einer elektronischen Zigarette das Gehäuse die Form eines länglichen Zylinders hat. In dem Gehäuse sind zumindest die elektrische Energiequelle und die elektrischen Funktionseinheiten enthalten, welche insoweit vom Gehäuse umgeben und dadurch geschützt sind. Der Verdampfer und das Heizelement werden mit elektrischer Energie von der elektrischen Energiequelle versorgt, bei der es sich zumeist um eine Batterie handelt. Die Batterie kann wahlweise aufladbar oder auch nicht aufladbar ausgeführt sein. Das Heizelement bewirkt eine Verdampfung des im Vorratsspeicher gespeicherten Aromastoffes, wobei der dadurch entstehende Dampf vom Benutzer inhaliert wird. In den meisten Fällen wird als Aromastoff eine Flüssigkeit verwendet und ist dementsprechend der Vorratsspeicher als Liquidtank ausgebildet. Gerade bei elektronischen Zigaretten unterscheidet man zwischen einmal und mehrfach benutzbaren Ausführungen. Im ersteren Fall wird eine nicht wiederaufladbare Batterie verwendet und ist der Vorratsspeicher weder auffüllbar noch auswechselbar, während im letztgenannten Fall zumindest der Vorratsspeicher entweder wiederbefüllbar oder als auswechselbare Patrone oder Kapsel ausgebildet ist.

Derartige elektronische Zigaretten und Pfeifen bilden eine Alternative zu herkömmlichen Tabakzigaretten, -Zigarren und -pfeifen, die auch übergreifend als "Verbrennungsrauchprodukte" bezeichnet werden. Denn elektronische Zigaretten und Pfeifen können gesundheitliche Vorteile aufweisen, insbesondere indem Aromastoffe zum Einsatz gelangen, die weniger krebserregende Stoffe enthalten sowie eine Verbrennung und damit einhergehende Verbrennungsstoffe vermeiden.

Eine Beschreibung des Aufbaus und der Funktionsweise einer elektronischen Zigarette findet sich beispielsweise in der DE 20 2008 018 338 U1. Weitere Beispiele elektronischer Zigaretten sind in WO2013089551 A1, DE202012101880U1, US2011304282A1 und US2013192615 offenbart.

Zur Versorgung der elektrischen Funktionseinheiten mit elektrischer Energie vonseiten der elektrischen Energiequelle sind elektrische Leiter vonnöten, die von der elektrischen Energiequelle zu den einzelnen elektrischen Funktionseinheiten durch das Rauchprodukt geführt und mit den Anschlusskontakten der elektrischen Energiequelle und der elektrischen Funktionseinheiten verdrahtet und verlötet werden müssen. Die Anordnung und Ausbildung von elektrischen Leitern erschwert nicht nur die Fertigung eines Rauchproduktes der eingangs genannten Art, sondern bildet auch einen limitierenden Faktor für die Konstruktion eines derartigen Rauchproduktes. Die bekannten elektrischen Rauchprodukte müssen daher aufwendig manuell gefertigt werden, was nur geringe Stückzahlen ermöglicht und zum Teil erhebliche Schwankungen hinsichtlich der Qualität mit sich bringt

Es ist eine Aufgabe der vorliegenden Erfindung, für ein Rauchprodukt der eingangs genannten Art eine verbesserte Konstruktion vorzuschlagen, bei der die Anordnung und Ausbildung von elektrischen Leitern im Wesentlichen keinen limitierenden Einfluss auf die Konstruktion insbesondere hinsichtlich der Anordnung der elektrischen Energiequelle und der mindestens einen elektrischen Funktionseinheit sowie auf die Fertigung des Rauchproduktes haben.

Zur Lösung dieser Aufgabe schlägt die Erfindung ein Rauchprodukt gemäß dem vorliegenden Anspruch 1 vor.

Dadurch, dass das Gehäuse mit elektrischen Leiterbahnen versehen wird, die somit an oder in dem Gehäuse entlang verlaufen, bietet die Erfindung eine konstruktiv besonders einfache und zugleich geschickte Anordnung der elektrischen Leiterbahnen. Denn die elektrischen Leiter werden aus dem Innenraum des Rauchproduktes in dem Gehäuse und somit in die Peripherie des Rauchproduktes verlagert. Somit bleibt die Konstruktion des Rauchproduktes insbesondere hinsichtlich der Ausbildung und Anordnung der elektrischen Energiequelle und der elektrischen Funktionseinheiten durch die Verlegung von elektrischen Leitern weitestgehend unbeeinflusst, was beispielsweise auch den Einsatz geometrisch einfach gehaltener Bauelemente wie insbesondere die erwähnte elektrische Energiequelle und die erwähnten elektrischen Funktionseinheiten möglich macht. Mit Hilfe der erfindungsgemäßen Konstruktion lässt sich das Rauchprodukt auf vollkommen neue Art und Weise in einer maschinellen Fertigung weitaus einfacher und effizienter einfacher herstellen, nicht zuletzt weil eine besondere Verlegung und Verdrahtung sowie ein Verlöten von elektrischen Leitern entfällt, sondern sich die Verbindung zwischen den Anschlüssen der elektrischen Energiequelle und der elektrischen Funktionseinheiten mit den elektrischen Leiterbahnen besonders einfach und leistungsfähig herstellen lässt. Ein Verlöten und/oder Verschrauben der elektrischen Leiterbahnen mit Anschlusskontakten der elektrischen Energiequelle und der elektrischen Funktionseinheiten kann entfallen, was einen weiteren Vorteil für die Fertigung bietet. Mithilfe der erfindungsgemäßen Anordnung von elektrischen Leiterbahnen an und/oder in dem Gehäuse, insbesondere an und/oder in einer Gehäusewand, lassen sich beispielsweise auch räumlich auseinanderliegende elektrische Komponenten überbrücken, zu denen ja mindestens die elektrische Energiequelle und die mindestens eine elektrische Funktionseinheit gehören; dies kann beispielsweise vorteilhaft zum Austarieren des Rauchproduktes genutzt werden, um einen ausbalancierten Schwerpunkt zu erhalten, indem die zumeist relativ schwere elektrische Energiequelle an einer gewünschten Stelle angeordnet wird. Ein weiterer Vorteil der Erfindung besteht darin, dass vor Fertigung des Rauchproduktes und unabhängig von der Herstellung und Anordnung der elektrischen Energiequelle und der mindestens einen elektrischen Funktionseinheit die elektrischen Leiterbahnen auf bzw. in dem Gehäuse vorkonfektioniert werden können. Schließlich begünstigt die Erfindung die Verwendung von standardisierten Bauelementen und insbesondere elektrischen Funktionseinheiten mit einer genormten oder standardisierten Anordnung von elektrischen Anschlusskontakten, was in Abkehr vom Stand der Technik - eine Fertigung im großtechnischen Stil und somit eine Massenproduktion auf besonders einfache und zugleich effiziente Weise ermöglicht. Aus Platzgründen sind die elektrischen Leiterbahnen zumindest abschnittsweise in mindestens zwei Ebenen übereinander angeordnet und die Ebenen zumindest abschnittsweise mithilfe von Isoliermaterial elektrisch voneinander getrennt.

Auf diese Weise lässt sich eine Anordnung von mehrlagig aufgebauten Leiterbahnen realisieren, wobei entsprechend der Ausbildung von elektrisch isolierendem Material ein elektrischer Kontakt zwischen den Leiterbahnebenen gezielt verhindert oder ermöglicht wird.

Bevorzugte Ausführungen und Weiterbildungen der Erfindung sind in den abhängigen Ansprüchen angegeben.

Die Erfindung lässt sich nicht nur in einem elektrischen bzw. elektronischen Rauchprodukt einsetzen, sondern auch in einem herkömmlichen Rauchprodukt, das als Verbrennungsrauchprodukt mit einem Filter ausgebildet ist, indem die elektrische Energiequelle und die mindestens eine elektrische Funktionseinheit innerhalb des Filters, beispielsweise einer Filterzigarette, angeordnet ist und das Gehäuse den Filter zumindest teilweise im Bereich der elektrischen Energiequelle und der mindestens einen elektrischen Funktionseinheit umgibt. Die Kombination eines herkömmlichen Verbrennungsrauchproduktes mit elektrischen bzw. elektronischen Komponenten, wie sie aus einer elektronischen Zigarette bekannt sind, also einer elektrischen Energiequelle und mindestens einer von dieser versorgten elektrischen Funktionseinheit durch Integration in den Filter des herkömmlichen Verbrennungsrauchproduktes eröffnet völlig neue Anwendungsmöglichkeiten, die insbesondere die Vorteile des Genusses eines herkömmlichen Verbrennungsrauchproduktes mit denen einer elektronischen Zigarette verbinden. Beispielsweise ist mit einem solchen kombinierten Rauchprodukt die Verwendung von besonders leichtem Tabak und/oder weniger krebserregenden Stoffen denkbar, während sich mit den elektrischen Komponenten aus der elektronischen Zigarette gezielt eine Beeinflussung des Geschmackes oder eine Geschmacksverstärkung erzielen lässt. Die elektrischen Komponenten aus der elektronischen Zigarette, insbesondere elektrische Energiequelle und die mindestens eine elektrische Funktionseinheit, sind bei einem herkömmlichen Verbrennungsrauchprodukt vorteilhaft im Filter untergebracht, wonach sich die gewünschten Effekte auch bei einem Abbrennen des Tabakabschnitts erzielen lassen.

Eine bevorzugte Ausführung, bei welcher das Rauchprodukt als elektrisches Rauchprodukt ausgebildet ist und elektrische Funktionseinheiten aufweist, die mindestens einen Verdampfer mit einem zur Aufbewahrung mindestens eines Aromastoffes vorgesehenen Vorratsspeicher und ein Heizelement umfassen, wobei das Gehäuse gemeinsam die elektrische Energiequelle und die elektrischen Funktionseinheiten zumindest teilweise umgibt, ist dadurch gekennzeichnet, dass das Gehäuse elektrische Leiterbahnen zur zumindest teilweisen elektrischen Verbindung von elektrischen Funktionseinheiten miteinander aufweist.

Eine alternative Ausführung, bei welcher das Rauchprodukt ebenfalls als elektrisches Rauchprodukt ausgebildet ist und mindestens ein Heizelement, insbesondere ein Mikroheizelement, als mindestens eine elektrische Funktionseinheit sowie mindestens ein unter Wärmeeinwirkung Aromastoffe abgebendes Aromastoffelement, das bevorzugt als Aromastoffe enthaltende Mikrokapsel ausgebildet ist, und eine im Gehäuse vorgesehene Verdampfungskammer, in der das Heizelement Aromastoffe aus dem Aromastoffelement verdampft, aufweist, zeichnet sich dadurch aus, dass am Gehäuse das Heizelement und das Aromastoffelement angeordnet sind. Bei dieser alternativen Ausführung wird für das elektrische Rauchprodukt weder ein Verdampfer, noch ein Vorratsspeicher für den Aromastoff benötigt. Vielmehr ist für ein derartiges elektrisches Rauchprodukt nur noch die elektrische Energiequelle sowie gegebenenfalls Filter an den jeweiligen Enden erforderlich, während der übrige bzw. dazwischen gebildete Hohlraum innerhalb des Gehäuses als Verdampfungskammer genutzt werden kann, in der die Heizelemente die Aromastoffe aus dem Aromastoffelement verdampfen.

Bei einer bevorzugten Weiterbildung dieser alternativen Ausführung sind das Heizelement und das Aromastoffelement am Gehäuse übereinander angeordnet und dabei von einer thermischen Isolierlage voneinander getrennt, wodurch sich eine besonders platzsparende Anordnung ergibt.

Zweckmäßigerweise ist das mindestens eine Heizelement auf den elektrischen Leiterbahnen angeordnet, wodurch eine besonders einfach Anschlussmöglichkeit erzielt wird.

Des weiteren kann bei dieser alternativen Ausführung das Gehäuse eine, vorzugsweise streifenförmige, flexible Umhüllungslage bilden, die zumindest die elektrische Energiequelle umgibt, und das Heizelement und/oder das Aromastoffelement auf der Umhüllungslage aufgedruckt sein, wodurch sich eine besonders geschickte Anordnung von Heizelement und/oder Aromastoffelement ergibt.

Grundsätzlich kann bevorzugt das Gehäuse eine, vorzugsweise streifenförmige, flexible Umhüllungslage bilden, die zumindest die elektrische Energiequelle umgibt.

Demnach lässt sich eine elektrische Verbindung der elektrischen Energiequelle und der mindestens einen elektrischen Funktionseinheit auf einfache Weise dadurch erzielen, dass die flexible Umhüllungslage mit den daran vorgesehenen elektrischen Leiterbahnen gemeinsam um die elektrische Energiequelle und die mindestens eine elektrische Funktionseinheit gewickelt wird.

Zweckmäßigerweise wird die Umhüllungslage von zwei sich gegenüberliegenden Längsseitenrändern begrenzt, die zur Bildung einer geschlossenen Umhüllung miteinander verbunden, vorzugsweise verklebt oder verschweißt sind.

Bevorzugt weist die Umhüllungslage Papier und/oder Kunststofffolie auf.

Bei einer bevorzugten Weiterbildung dieser Ausführung kann die Umhüllungslage die elektrische Energiequelle und die mindestens eine elektrische Funktionseinheit in längsaxialer Richtung und/oder in Umfangsrichtung übergreifen, und zwar insbesondere unterbrechungsfrei und/oder durchgängig und/oder einstückig und/oder in Umfangsrichtung überlappend und/oder in axialer Richtung überlappend und dabei insbesondere unter Ausbildung einer Überlappungsnaht.

Soll ein Überlappungsbereich oder eine Überlappungsnaht zum Verbinden der einander gegenüber liegenden Langseitenränder der Umhüllungslage ausgebildet werden, kann mindestens eine Leiterbahn vor dem Langseitenrand enden, um den Überlappungsbereich bzw. die Überlappungsnaht leichter schließbar zu machen und insbesondere eine in längsaxialer Richtung gleichbleibend dicke und/oder hohe Naht zu ermöglichen.

Bei einer weiteren bevorzugten Weiterbildung der zuvor erwähnten Ausführung kann die Umhüllungslage gemeinsam gegen die elektrische Energiequelle und gegen die mindestens eine elektrische Funktionseinheit in radialer und/oder längsaxialer Richtung und/oder in Umfangsrichtung gespannt sein, um eine sichere Versorgung der mindestens einen elektrischen Funktionseinheit mit elektrischer Energie durch die elektrische Energiequelle zu bewirken und insbesondere eine zuverlässige elektrische Verbindung zwischen der elektrischen Energiequelle und der mindesten einen elektrischen Funktionseinheit herzustellen.

Vorzugsweise lässt sich die Umhüllungslage zum Aufnehmen der elektrischen Energiequelle und der mindestens einen elektrischen Funktionseinheit von einem weitgehend flächigen und/oder ausgebreiteten Zustand oder einem Zustand mit einem vorgebbaren Ausgangsradius zu einer, insbesondere schließbaren, Hülle umformen, wodurch auf diese Weise gleichzeitig eine elektrisch leitende Verbindung zwischen der elektrischen Energiequelle und der mindestens einen elektrischen Funktionseinheit hergestellt wird. Hierzu kann insbesondere eine Formateinrichtung vorteilhaft verwendet werden, wie sie bereits zur Herstellung herkömmlicher Rauchprodukte zum Einsatz kommt. Zusätzlich oder alternativ kann auch eine Rolleinrichtung Verwendung finden, wobei bevorzugt die aus der Umhüllungslage entstandene Hülle nach ihrer Umformung einen kleineren Radius, insbesondere zwischen 2 und 18 mm, aufweisen kann, bevorzugt zwischen 2, 5 und 10 mm.

Wird zur Bildung mindestens einer elektrischen Leiterbahn ein elektrisch leitendendes Klebemittel verwendet, so ist dieses bevorzugt auf die Umhüllungslage aufzutragen, wenn sie sich in einem weitgehend flächigen und/oder ausgebreiteten Zustand oder in einem Zustand mit einem vorgebbaren Ausgangsradius befindet.

Nicht zuletzt aus Gründen einer wirksamen elektrischen Isolierung sollten die elektrischen Leiterbahnen zumindest abschnittsweise innerhalb des Gehäuses, insbesondere in und/oder an einer sich längsaxial erstreckenden Gehäusewand, angeordnet sein. Die Leiterbahnen können an jeder gewünschten Stelle mit einer Isolationsschicht abgedeckt sein, die beispielsweise von einem isolierenden Klebstoff oder einer Folie gebildet wird.

Bevorzugt sollten die elektrischen Leiterbahnen zumindest abschnittsweise an der, vorteilhaft zylindermantelförmigen, Innenseite des Gehäuses freiliegen, um eine entsprechende Anschlussmöglichkeit für die elektrische Energiequelle oder die elektrischen Funktionseinheiten zu bieten. Hierzu sollten zweckmäßigerweise die elektrische Energiequelle und/oder die mindestens eine Funktionseinheit an ihrer, vorteilhaft zylindermantelförmigen, Außenseite elektrische Kontaktelemente aufweisen und die elektrischen Leiterbahnen zumindest an denjenigen Stellen freiliegen, an denen die elektrischen Kontaktelemente an der elektrischen Energiequelle und/oder der mindestens einen Funktionseinheit in elektrisch leitende Anlage bringbar sind.

Diese Ausführung eignet sich insbesondere für eine elektrische Energiequelle und elektrische Funktionseinheiten mit im Wesentlichen punktförmigen leitfähigen Kontaktflächen an deren Außenseite, wobei durch eine entsprechende, ggf. standardisierte bzw. normierte Positionierung der elektrischen Energiequelle oder der elektrischen Funktionseinheit sowohl in axialer Richtung als auch in Rotations- bzw. Umfangsrichtung der Kontakt hergestellt und somit die elektrische Energiequelle oder die mindestens eine elektrische Funktionseinheit an die elektrischen Leiterbahnen angeschlossen wird.

Zweckmäßigerweise sollte das Gehäuse zumindest im Bereich der oder benachbart zu den elektrischen Leiterbahnen elektrisch isolierendes Material aufweisen.

Alternativ oder zusätzlich ist es denkbar, die elektrischen Leiterbahnen zumindest teilweise mit elektrisch isolierendem Klebstoff an der Umhüllung zu befestigen.

Die Leiterbahnen können beispielsweise auch durch aufgetragenen, elektrisch leitenden Klebstoff realisiert werden, der beispielsweise durch eine Düse, durch Scheibenbeleimung und/oder durch eine Leimwalze aufgebracht werden kann.

Die Leiterbahnen können vorzugsweise durchgehend und/oder intermittierend, und/oder unterbrochen ausgebildet sein, was einen breiten Gestaltungsraum bei zu realisierenden elektrischen Kontaktstellen sowie ebenfalls zur Vermeidung von ungewollten elektrischen Verbindungsstellen ermöglicht.

Ist das Gehäuse mit den daran bzw. darin vorgesehenen elektrischen Leiterbahnen als ein im Wesentlichen starres, vorzugsweise rohrförmiges, Gehäuse ausgebildet, kann die Verwendung einer Umhüllungslage, welche von einem weitgehend ebenen Zustand in einen die elektrische Energiequelle und die mindestens eine elektrische Funktionseinheit umgebenden Zustand zu verbringen ist, entfallen und mit einem Einschieben dieser Komponenten gearbeitet werden. Dabei kann beispielsweise mit einer Art Schrumpfschlauch gearbeitet werden, wodurch eine gute Kontaktfähigkeit gewährleistet werden kann, in dem beispielsweise die Umhüllung zunächst erwärmt wird und sich später beim Abkühlen zusammenzieht. Ein Erwärmen und Verarbeiten der Umhüllungslage bei einem Umhüllen, ausgehend von einem weitgehend flächigen und/oder ausgebreiteten Zustand, kann ebenfalls mit Vorteil erfolgen.

Eine konstruktiv besonders einfache Anordnung der elektrischen Leiterbahnen auf dem Gehäuse lässt sich beispielsweise durch zumindest abschnittsweises Aufdrucken erzielen.

Für den überwiegenden Fall, dass das Rauchprodukt eine im Wesentlichen längliche, insbesondere zylindrische, Form aufweist, sollten bevorzugt die elektrischen Leiterbahnen im Wesentlichen in Längsrichtung des Rauchproduktes verlaufen oder zumindest sich im Wesentlichen in Längsrichtung des Rauchproduktes erstreckende Abschnitte aufzuweisen, um die in Längsrichtung hintereinanderliegenden elektrischen Komponenten miteinander zu verbinden, welche ja die elektrische Energiequelle und die mindestens eine elektrische Funktionseinheit umfassen. Auf diese Weise werden längsaxialer Lage- und/oder Positionisierungstoleranzen ermöglicht und trotzdem elektrische Verbindungen funktionssicher gewährleistet.

Bei einer Weiterbildung dieser Ausführung weist mindestens eine elektrische Leiterbahn mindestens einen im Wesentlichen winklig oder quer zur Längserstreckung des Rauchproduktes verlaufenden Abschnitt auf, der sich ggf. im Wesentlichen über den gesamten Umfang des Gehäuses erstreckt, insbesondere um einen elektrischen ringförmigen Kontakt zu bilden, wodurch für den Anschluss an die elektrischen Leiterbahnen nur eine axiale Positionierung der elektrischen Energiequelle und/oder der mindestens einen elektrischen Funktionseinheit unter Vermeidung einer rotatorischen Positionierung vonnöten ist. Auf diese Weise wird eine Drehwinkel-Lagetoleranzen ermöglicht und trotzdem eine elektrisch leitende Verbindung gewährleistet.

Außerdem ist es denkbar, anstelle der oder zusätzlich zu den elektrischen Leiterbahnen das Gehäuse noch mit mindestens einem elektronischen Bauelement zu versehen. Bei einer Weiterbildung dieser Ausführung kann das Gehäuse mehrere elektronische Bauelemente aufweisen, die bevorzugt zu einer Schaltung zusammengefasst sind, welche beispielsweise auch kundenspezifisch programmiert sein kann. Auf diese Weise lassen sich Steuerungsfunktionen oder andere Funktionen in das Gehäuse, insbesondere seine sich längsaxial erstreckende Gehäusewandung, verlagern. Nicht nur reine Leiterbahnen, sondern auch komplette integrierte Schaltkreise lassen sich bevorzugt aufdrucken. Somit kann das Gehäuse eine Art aufgerollte Platine umfassen oder als solche ausgebildet sein, was insbesondere im Falle der Verwendung einer Umhüllungslage zur Bildung des Gehäuses konstruktiv von Vorteil ist, insbesondere eine Vielzahl unterschiedlicher Funktionen erlaubt, wie Batterie und Verdampfungssteuerung und/oder Verbraucheranzeige.

Bei einer weiteren bevorzugten Weiterbildung kann das mindestens eine elektrische Bauelement ein Anzeigeelement aufweisen, wozu beispielsweise mindestens eine Leuchtdiode verwendet werden könnte. Alternativ oder zusätzlich können auch organische Leuchtdioden (OLED) bildende Aufdrucke zum Einsatz kommen, insbesondere auf der äußeren Mantelfläche des Gehäuses, der Umhüllung und/oder der Umhüllungslage. Mithilfe der Anzeige lassen sich beispielsweise Leuchteffekte auf der Oberfläche des Gehäuses erzeugen, um beispielsweise die Marke des Herstellers des Rauchproduktes darzustellen und/oder einen Verbrauchsstand oder Füllgrad des Aromastoffes anzuzeigen.

Bei einer weiteren bevorzugten Ausführung ist die mindestens eine elektrische Funktionseinheit über eine elektrische Schalteinrichtung an der elektrischen Energiequelle angeschlossen, wobei das Gehäuse, insbesondere seine sich längsaxial erstreckende Gehäusewandung, mit der elektrischen Schalteinrichtung versehen und die elektrische Schalteinrichtung in die mindestens eine elektrische Leiterbahn eingesetzt ist. Bei dieser Ausführung bietet die Erfindung durch Integration in das Gehäuse, insbesondere seine sich längsaxial erstreckende Gehäusewandung, eine besonders Platz sparende Anordnung der elektrischen Schalteinrichtung, mittels derer die mindestens eine elektrische Funktionseinheit an die elektrische Energiequelle zugeschaltet wird.

Bei einer Weiterbildung der zuvor erwähnten Ausführung ist ein Unterdrucksensor vorgesehen, der bei Auftreten von von einem Benutzer erzeugtem Unterdruck im Rauchprodukt die elektrische Schalteinrichtung veranlasst, eine elektrische Verbindung zwischen der elektrischen Energiequelle und der mindestens einen elektrischen Funktionseinheit herzustellen. Bei dieser Weiterbildung wird die mindestens eine elektrische Funktionseinheit sozusagen automatisch eingeschaltet. Zusätzlich kann ein solcher Unterdrucksensor, der auch als Strömungsschalter bezeichnet wird, dazu benutzt werden, während der Herstellung das Rauchprodukt auf Funktion zu überprüfen. Auch ein solcher Unterdrucksensor bzw. Strömungsschalter kann vorteilhaft in das Gehäuse integriert werden, und zwar bevorzugt an einer Stelle, in der das Gehäuse mit einer Öffnung oder Perforation versehen ist. Hierzu kann vorzugsweise das Gehäuse, insbesondere seine sich längsaxial erstreckende Gehäusewandung, mit einer Ventilationsöffnung zum Eintritt von Umgebungsluft versehen sein, und zwar insbesondere mit einer querschnittskonstanten Ventilationsöffnung und/oder einer querschnittsveränderlichen Ventilationsöffnung. Vorzugsweise kann eine querschnittsveränderliche Ventilationsöffnung durch Ausbildung einer sich bei Anliegen von Unterdruck einwärts bewegenden, zungenartig ausgeformten Lasche ausgeführt sein, welche insbesondere innen- bzw. unterseitig ein Kontaktelement zum Schließen eines Stromkreises bei Erreichen einer Schaltposition trägt und dabei einen Lufteintrittsspalt freigibt und sich bei nachlassendem oder fehlendem Unterdruck in ihre Ausgangsposition zurückbewegt und dabei den Luftspalt schließt und den Stromkreis unterbricht.

Bei einer weiteren bevorzugten Weiterbildung der zuvor erwähnten Ausführung weist die elektrische Schalteinrichtung einen druckempfindlichen Schalter auf, der, insbesondere für eine Erstinbetriebnahme des Rauchproduktes, bei Druckbeaufschlagung von außen schließt. Somit kann durch eine einfache Druckbeaufschlagung von außen durch den Benutzer das Rauchprodukt aktiviert werden. Beispielsweise kann der druckempfindliche Schalter ein stiftförmiges Kontaktelement aufweisen, das bei Druckbeaufschlagung einen benachbarten Abschnitt mindestens einer elektrischen Leiterbahn zur Herstellung eines elektrischen Kontaktes durchstößt.

Nachfolgend wird ein bevorzugtes Ausführungsbeispiel der Erfindung anhand der beiliegenden Zeichnungen näher erläutert. Es zeigen:
- Fig. 1: schematisch im Längsschnitt eine elektronische Zigarette in einer aus dem Stand der Technik bekannten Ausführung;
- Fig. 2: schematisch in perspektivischer Ansicht eine durchsichtige Darstellung einer elektrischen Zigarette gemäß einem bevorzugten Ausführungsbeispiel der Erfindung;
- Fig. 3: eine Draufsicht auf einen Abschnitt eines für die elektronische Zigarette von Fig. 2 verwendeten Umhüllungsstreifens;
- Fig. 4: schematisch eine längsaxiale Umhüllung des Umhüllungsstreifens; und
- Fig. 5: schematisch einen Arbeitsschritt bei einer queraxialen Umhüllung des Umhüllungsstreifens.

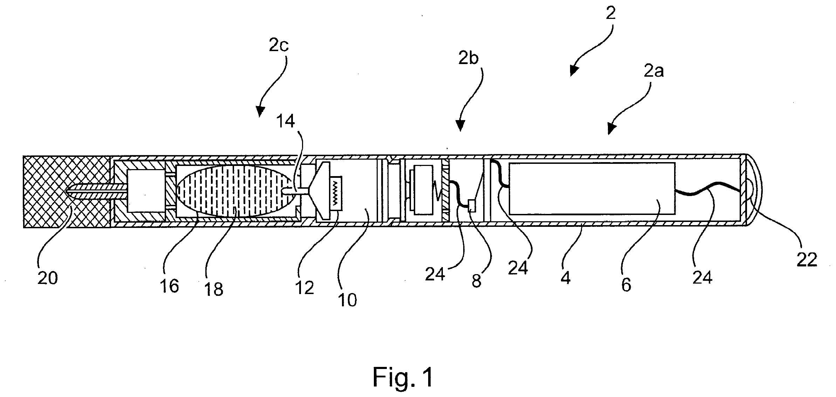

Zunächst wird zum besseren Verständnis ein Aufbau einer elektronischen Zigarette anhand von Fig. 1 erläutert, die eine aus der DE 20 2008 018 338 U1 bekannte Ausführung zeigt. Hiernach weist die elektronische Zigarette 2 ein starres zylindrisches Gehäuse 4 auf, in dem eine Batterie 6, mehrere elektronische Funktionseinheiten sowie weitere Komponenten enthalten sind, was nachfolgend noch näher erörtert wird. In der dargestellten bekannten Ausführung ist die Batterie 6 in einem vorderen ersten Abschnitt 2a der elektronischen Zigarette 2 untergebracht. In einem zweiten Abschnitt 2b der elektronischen Zigarette 2 ist ein Unterdrucksensor 8 enthalten. Ein vom vorderen ersten Abschnitt 2a entfernt liegender dritter Abschnitt 2c der elektrischen Zigarette 2 enthält einen Verdampfer 10, der eine Heizung 12 aufweist und über ein Röhrchen 14 mit einem Liquidtank 16 verbunden ist, welcher ebenfalls im Gehäuse 4 enthalten und zur Aufnahme von aromatischer Flüssigkeit 18 vorgesehen ist. An den dritten Abschnitt 2c der elektronischen Zigarette 2 schließt sich bei der dargestellten bekannten Ausführung ein Mundstück 20 an, das gleichzeitig einen Filter und das Ende der elektronischen Zigarette 2 bildet. Am gegenüberliegenden anderen Ende des vorderen ersten Abschnittes 2a der elektronischen Zigarette 2 sitzt eine Leuchtdiode 22, die im Betrieb der elektronischen Zigarette 2 als sogenanntes Glutlicht einen Glimmvorgang simuliert.

Von den zuvor beschriebenen Komponenten bilden insbesondere der Unterdrucksensor 8, der Verdampfer 10, die Heizung 12 und die Leuchtdiode 22 sogenannte elektronische Funktionseinheiten, die von der Batterie 6 als elektrische Energiequelle mit elektrischem Strom versorgt werden. Hierzu sind die genannten elektronischen Funktionseinheiten an die Batterie 6 über elektrische Leitungen angeschlossen, die in Fig. 1 teilweise dargestellt und mit dem Bezugszeichen "24" gekennzeichnet sind.

Im Betrieb, wenn also die genannten elektronischen Funktionseinheiten von der Batterie 6 mit elektrischem Strom versorgt werden, bewirkt die Heizung 12 im Verdampfer 10 eine Verdampfung der aus dem Liquidtank 16 entnommenen aromatischen Flüssigkeit 18. Allerdings wird dieser Vorgang in der dargestellten bekannten Ausführung erst bei Benutzung durch den Benutzer aktiviert. Nimmt der Benutzer über den Filter 20 einen Zug, entsteht im Gehäuse 4 ein Unterdruck, der vom Unterdrucksensor 8 erfasst wird. Der Unterdrucksensor 8 veranlasst dann einen in Fig. 1 nicht dargestellten Schalter zu schließen, wodurch zwischen der Batterie 6 einerseits und insbesondere dem Verdampfer 10 und der Leuchtdiode 22 andererseits über die elektrischen Leitungen 24 eine elektrische Verbindung hergestellt wird.

Wie Fig. 1 erkennen lässt, verlaufen in der bekannten Ausführung die elektrischen Leitungen 24 im Wesentlichen mitten durch das Gehäuse 4.

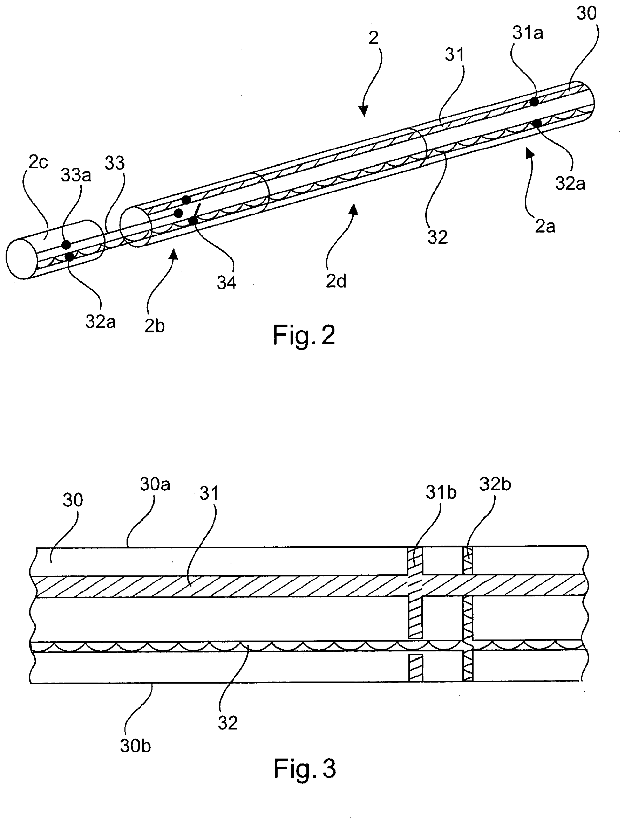

In Fig. 2 ist schematisch eine elektronische Zigarette 2 gemäß einer bevorzugten Ausführung der Erfindung gezeigt, welche grundsätzlich einen ähnlichen Aufbau und ähnliche Komponenten wie die in Fig. 1 gezeigte bekannte Ausführung aufweist, wobei zwar die Komponenten in Fig. 2 im Einzelnen nicht dargestellt sind, jedoch nachfolgend bei Bedarf auf diese Komponenten unter Verwendung der in Fig. 1 gezeigten Bezugszeichen Bezug genommen wird. Allerdings unterscheidet sich die Ausführung von Fig. 2 gegenüber der bekannten Ausführung von Fig. 1 dadurch, dass anstelle eines starren zylindrischen Gehäuses 4 wie in der in Fig. 1 gezeigten bekannten Ausführung eine aus einem flexiblen Umhüllungsstreifen 30 gebildete Umhüllung vorgesehen ist und dass als elektrische Leiter anstelle von durch das Gehäuse 4 geführten elektrischen Kabeln 24 wie in der in Fig. 1 gezeigten bekannten Ausführung elektrische Leiterbahnen 31 bis 33 an und/oder in dem Umhüllungsstreifen 30 ausgebildet sind. Wie Fig. 2 erkennen lässt, erstrecken sich die elektrischen Leiterbahnen 31 bis 33 an oder in dem Umhüllungsstreifen 30 entlang in Längsrichtung der elektronischen Zigarette 2. Dabei sind im dargestellten Ausführungsbeispiel gemäß Fig. 2 die elektrischen Leiterbahnen 31 bis 33 an bestimmten Stellen mit punktförmigen leitfähigen Kontaktflächen 31a, 32a bzw. 33a versehen, die zur Herstellung einer elektrischen Verbindung mit der Batterie im vorderen ersten Abschnitt 2a und den als Verbraucher vorgesehenen elektronischen Funktionseinheiten 8, 10, 12 und 22 in den übrigen Abschnitten an der Innenseite des Umhüllungsstreifen 30 freiliegen. Dementsprechend müssen die Batterie 6 und die elektronischen Funktionseinheiten 8, 10, 12 und 22 an ihrer Außenseite mit entsprechenden Kontakten versehen sein, die in Berührung mit den Kontaktflächen 31a, 32a bzw. 33a bringbar sind, was in den Figuren jedoch nicht dargestellt ist.

Wie des Weiteren Fig. 3 schematisch erkennen lässt, weisen die elektrischen Leiterbahnen 31, 32 quer verlaufende Abschnitte 31b bzw. 32b auf, wobei der quer verlaufende Abschnitt 31b der ersten Leiterbahn 31 gegenüber der zweiten Leiterbahn 32 und der quer verlaufende Abschnitt 32b der zweiten elektrischen Leiterbahn 32 gegenüber der ersten elektrischen Leiterbahn 31 durch nicht dargestelltes elektrisch isolierendes Material elektrisch isoliert ist. Fig. 3 zeigt den Umhüllungsstreifen 30 in einem im Wesentlichen ausgebreiteten Zustand und lässt deshalb auch dessen Langseitenränder 30a, 30b erkennen, die nach Umwicklung des Umhüllungsstreifens 30 gemeinsam um die Abschnitte 2a bis 2d der elektronischen Zigarette 2 zur Bildung einer zylindrischen Hülse miteinander verbunden, vorzugsweise verklebt oder verschweißt, sind. Wie Fig. 3 ferner erkennen lässt, erstrecken sich die quer verlaufenden Abschnitte 31b, 32b der ersten und zweiten elektrischen Leiterbahnen 31, 32 über die gesamte Breite des Umhüllungsstreifens 30, sodass bei Bildung einer Hülse durch den Umhüllungsstreifen 30 und der Verbindung seiner beiden gegenüberliegenden Langseitenränder 30a, 30b aus den quer verlaufenden Abschnitten 31b, 32b der ersten und zweiten elektrischen Leiterbahnen 31, 32 ringförmige Kontakte entstehen, die an einigen bestimmten Stellen alternativ oder zusätzlich zu den punktförmigen Kontaktflächen 31a, 32a bzw. 33a zur Herstellung einer elektrischen Verbindung mit entsprechenden Kontakten an der Außenseite der elektronischen Funktionseinheiten 8, 10, 12 und 22 vorgesehen sind. Auf diese Weise entfällt die Notwendigkeit einer rotatorischen Positionierung, also einer Positionierung in einer bestimmten vorgegebenen Winkellage, für die elektronischen Funktionseinheiten 8, 10, 12 und 22, sodass nur noch deren axiale Positionierung erforderlich wird, um eine elektrische Verbindung mit den elektrischen Leiterbahnen 31, 32 bzw. 33 an oder in dem Umhüllungsstreifen 30 herzustellen.

Die punktförmigen Kontaktflächen 31a, 32a, 33a und die im montierten Zustand ringförmige Kontakte bildenden quer verlaufenden Abschnitte 31b, 32b der elektrischen Leiterbahnen 31, 32 liegen an der Innenseite des Umhüllungsstreifens 30 frei, um eine entsprechende Anschlussmöglichkeit für die Batterie 6 und die elektronischen Funktionseinheiten 8, 10, 12 und 22 (Fig. 1) zu bieten. Demgegenüber sind die übrigen Abschnitte der elektrischen Leiterbahnen 31, 32, 33 entweder innerhalb des Umhüllungsstreifens 30 angeordnet oder bei Anordnung auf einer Oberfläche, insbesondere der Innenseite, des Umhüllungsstreifens 30 mit elektrisch isolierendem Material bedeckt, wobei die Befestigung der elektrischen Leiterbahnen 31, 32, 33 am Umhüllungsstreifen 30 mit elektrisch isolierendem Klebstoff oder durch einfaches Bedrucken erfolgt.

Von der in Fig. 1 gezeigten bekannten Ausführung unterscheidet sich die in Fig. 2 dargestellte erfindungsgemäße Ausführung ferner noch dadurch, dass zwischen dem vorderen ersten Abschnitt 2a und dem mittleren zweiten Abschnitt 2b noch ein weiterer Abschnitt 2d vorgesehen ist, um auf diese Weise zu zeigen, dass sich mithilfe der erfindungsgemäßen Anordnung der elektrischen Leiterbahnen 31, 32 an oder in dem Umhüllungsstreifen 30 beispielsweise auch räumlich auseinanderliegende elektrische Komponenten und somit insbesondere eine größere Distanz zwischen der Batterie 6 einerseits und den elektronischen Funktionseinheiten 10 und 12 andererseits überbrücken lassen; dies kann beispielsweise vorteilhaft zum Austarieren der elektronischen Zigarette 2 genutzt werden, um einen ausbalancierten Schwerpunkt zu erhalten, wodurch sich die elektronische Zigarette 2 vom Benutzer besonders angenehm halten lässt.

Im Gegensatz zu Fig. 1 lässt Fig. 2 schematisch noch einen Schalter 34 erkennen, der im zweiten Abschnitt 2b der elektronischen Zigarette 2 angeordnet ist und dafür sorgt, im geschlossenen Zustand die Batterie 6 im vorderen ersten Abschnitt 2a an die in den übrigen Abschnitten der elektronischen Zigarette 2 befindlichen elektronischen Funktionseinheiten 8, 10, 12 und 22 zu schalten, damit diese dann von der Batterie 6 mit elektrischem Strom versorgt werden. Dieser Schalter 34 ist bevorzugt ebenfalls am oder im Umhüllungsstreifen 30 angeordnet und kann als druckempfindlicher Schalter ausgebildet sein, der, insbesondere für eine Erstinbetriebnahme oder Aktivierung der elektronischen Zigarette 2, bei Druckbeaufschlagung von außen schließt. Somit kann durch eine einfache Druckbeaufschlagung von außen auf den zweiten Abschnitt 2b die elektronische Zigarette 2 durch den Benutzer aktiviert werden. Beispielsweise kann der Schalter 34 ein stiftförmiges Kontaktelement aufweisen, das in den Figuren nicht dargestellt und bei Druckbeaufschlagung einen benachbarten Abschnitt der elektrischen Leiterbahnen 31 bis 33 zur Herstellung eines elektrischen Kontaktes durchstößt.

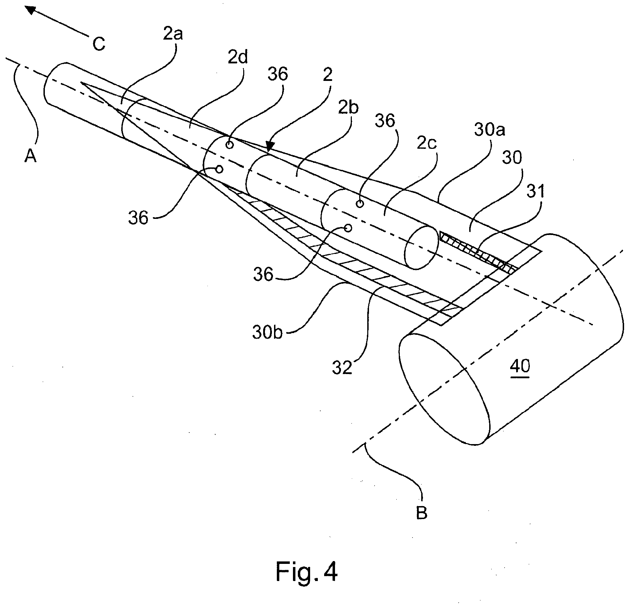

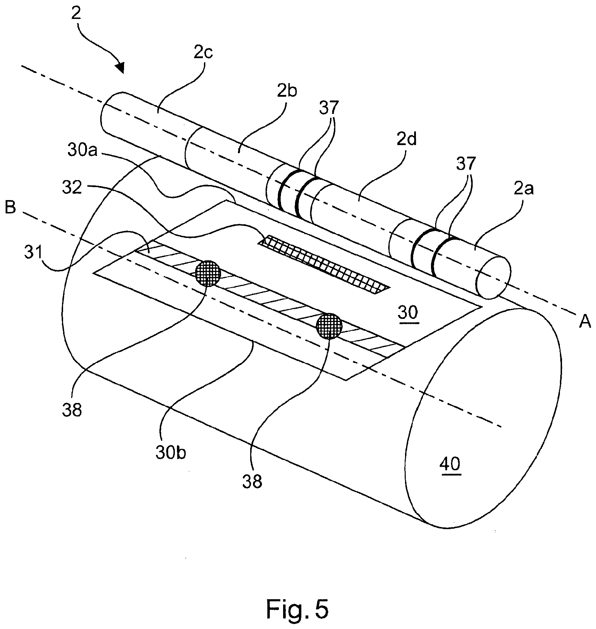

In den Figuren 4 und 5 sind schematisch zwei Möglichkeiten zur Aufbringung des Umhüllungsstreifens 30 auf die zur Bildung der elektrischen Zigarette 2 vorgesehenen, stabförmigen Anordnung von axial fluchtenden zylindrischen Abschnitten 2a bis 2d abgebildet.

Gemäß einem Ausführungsbeispiel werden die Batterie 6, die zylinderförmig ausgebildet ist, eine elastische Umhüllung aufweisen kann und sich im vorderen ersten Abschnitt 2a befindet, und die als Verbraucher vorgesehenen elektronischen Funktionseinheiten 8, 10, 12 und 22 in den übrigen Abschnitten längsaxial aneinander gereiht und die so gebildete Anordnung auf dem Umhüllungsstreifen 30 abgelegt, der im dargestellten Ausführungsbeispiel mit zwei sich in Längsrichtung der zu bildenden elektronischen Zigarette 2 erstreckenden und im wesentlichen parallel zueinander verlaufenden Leiterbahnen 31, 32 versehen ist, wie Fig. 4 erkennen lässt.

Der Umhüllungsstreifen 30 wird in Form eines auf einer Bobine aufgewickelten Bandmaterials aus Papier oder Folie bereitgestellt. Auf dem Weg von der Bobine zu einer in den Zeichnungen nicht dargestellten Formateinrichtung oder in einer solchen Formateinrichtung ist eine ebenfalls nicht dargestellte Beleimstation zum Auftragen der Leiterbahnen 31, 32 vorgesehen. Hierbei werden die Leiterbahnen 31, 32 mit elektrisch leitendem Klebemittel erzeugt. Das Auftragen des elektrisch leitenden Klebemittels kann mit einer Düse, einer Leimscheibe und/oder einer Leimwalze erfolgen. Je nach herzustellendem Kontakt oder zu vermeidender elektrischer Verbindungsstelle kann eine Düse, eine Leimscheibe und/oder eine Leimwalze zum Auftragen einer Isolationsschicht vorgesehen sein, und zwar insbesondere einer Isolationsschicht aus isolierendem Klebemittel und/oder in Form einer Abdecklage, welche auf den gewünschten Abschnitt einer Leiterbahn 31 bzw. 32 aufgebracht wird.

Alternativ kann die Bobine zum Bereitstellen des Umhüllungsstreifens 30 auch vorkonfektioniertes Bandmaterial enthalten, welches bereits eine Leiterbahn oder die Leiterbahnen 31, 32 trägt. In diesem Fall würde die Verwendung der zuvor erwähnten Beleimstation entfallen oder für eine zweite oder weitere Leiterbahnen ausgebildet sein.

Bei Ablage der zur Bildung der elektronischen Zigarette 2 vorgesehenen stabförmigen Anordnung auf dem Umhüllungsstreifen 30 befindet sich der Umhüllungsstreifen 30 in einer ausgebreiteten Form. Der Umhüllungsstreifen 30 wird im ausgebreiteten Zustand der erwähnten und in den Zeichnungen nicht dargestellten Formateinrichtung zugeführt und durch die Formateinrichtung mit Hilfe eines ebenfalls nicht dargestellten umlaufenden Formatbandes gezogen, wobei sich der Umhüllungsstreifen 30 allmählich schließt. Dabei geraten die beiden Langseitenränder 30a, 30b in gegenseitige Überlappung und werden mit Hilfe eines in den Zeichnungen nicht dargestellten Klebstoffes oder einer ebenfalls nicht dargestellten Verschweißeinheit fest miteinander verbunden. Hierdurch werden die Batterie 6 und die elektronischen Funktionseinheiten 8, 10, 12 und 22 durch den Umhüllungsstreifen 30 quasi eingespannt, der bevorzugt mit einer leichten Vorspannung anliegt, was eine zuverlässige elektrische Verbindung zwischen den in den Figuren nicht dargestellten Kontaktflächen an der Batterie 6 und/oder an der jeweiligen elektronischen Funktionseinheit 8, 10, 12 bzw. 22 mit der gewünschten Leiterbahn 31 bzw. 32 zuverlässig gewährleistet. Deshalb ist es besonders zweckmäßig, die Batterie und die als Verbraucher vorgesehenen elektrischen Funktionseinheiten 8, 10, 12 und 22 auf ihrer Mantelfläche jeweils mit Kontaktflächen zu versehen, was einen selbstständigen Aspekt der vorliegenden Erfindung bildet, welcher unabhängig von der Ausgestaltung des Rauchproduktes ist und ein Ausgestalten von Energiequelle und/oder elektrischer Funktionseinheit hinsichtlich deren elektrischer Kontakte betrifft.

Die zuvor beschriebene längsaxiale Umhüllung durch den Umhüllungsstreifen 30 ist schematisch in Fig. 4 gezeigt. Dabei lässt Fig. 4 erkennen, dass die einzelnen zylindrischen Abschnitte 2a bis 2d in Richtung ihrer Längsachse zueinander fluchten und gemeinsam die erwähnte und für die Bildung der elektronischen Zigarette 2 vorgesehene stabförmige Anordnung bilden, die eine zylindrische Form mit einer gemeinsamen Längsachse A aufweist. Ebenfalls lässt Figur 4 schematisch die zuvor erwähnten Kontaktflächen erkennen, die auf der Mantelfläche zumindest einiger elektronischer Funktionseinheiten sowie der Batterie punktförmig ausgebildet und mit dem Bezugszeichen "36" gekennzeichnet sind. Der in Figur 4 mit dem Bezugszeichen "40" gekennzeichnete zylindrische Körper symbolisiert eine Transportrolle. Der zylindrische Körper 40 kann alternativ aber auch die erwähnte Bobine symbolisieren. Wie Figur 4 erkennen lässt, verläuft die Drehachse B des zylindrischen Körpers 40 rechtwinklig zur Längsachse A. Während der Umhüllung durch den Umhüllungsstreifen 30 findet der Transport in Richtung der gemeinsamen Längsachse A statt, was durch die Pfeil "C" in Figur 4 gekennzeichnet ist. Wie Figur 4 erkennen lässt und auch bereits zuvor beschrieben worden ist, schließt sich der Umhüllungsstreifen 30 mit zunehmender Bewegung in Richtung des Pfeils C mit Hilfe einer nicht dargestellten Formateinrichtung, bis die beiden Langseitenränder 30a, 30b übereinander liegen.

Zum Schließen des Überlappungsbereiches ist bevorzugt eine in den Figuren ebenfalls nicht dargestellte Leim- oder Schweißstation vorgesehen.

Das von der Bobine bereitgestellte Bandmaterial für die Bildung des Umhüllungsstreifens 30 hat bevorzugt eine Breite, welche dem Umfang der herzustellenden elektronischen Zigarette zuzüglich einer eventuellen Überlappungsbreite oder einer mehrfachen Länge des Umfanges zuzüglich einer entsprechend mehrfachen Überlappungsbreite entspricht.

Während Fig. 4 schematisch einen längsaxialen Umhüllungsvorgang zeigt, ist in Fig. 5 ein Arbeitsschritt für einen queraxialen Umhüllungsvorgang schematisch abgebildet.

Auch bei diesem Umhüllungsvorgang werden zunächst die Batterie 6, welche bevorzugt zylinderförmig ausgebildet ist und gewünschtenfalls eine elastische Umhüllung aufweist, und die als Verbraucher vorgesehenen elektronischen Funktionseinheiten 8, 10, 12 und 22 längsaxial aneinandergereiht, um eine gemeinsame stabförmige Anordnung zu bilden, die eine gemeinsame Längsachse A aufweist und für die Bildung der elektronischen Zigarette 2 vorgesehen ist.

Wie Fig. 5 erkennen lässt, weisen die Abschnitte 2a und 2b mantelseitig angeordnete Kontakte in Form von ringförmigen Kontaktflächen 37 auf. Die ringförmigen Kontaktflächen 37 können vollumfänglich umlaufend ausgebildet sein. In einer Abwandlung können die ringförmigen Kontaktflächen 37 in Umfangsrichtung offen ausgebildet sein und somit zwischen ihren umfangsseitigen Enden einen Abstand aufweisen. Auf diese Weise kann eine radiale Vorspannung gegen die Leiterbahnen und ein zuverlässiger elektrischer Kontakt realisiert werden, und zwar etwa nach Art einer Feder. Die ringförmigen Kontaktflächen 37 haben den Vorteil, eine elektrische Verbindung mit einer der elektrischen Leiterbahnen 31, 32 auf einfache Weise zu gewährleisten, und erlauben ein Aneinanderreihen der Batterie 6 und der elektronischen Funktionseinheiten 8, 10, 12 und 22 und ein Umhüllen mit dem Umhüllungsstreifen 30 in vielen beliebigen Orientierungen und insbesondere in vielen beliebigen Drehwinkellagen, und zwar insbesondere auch ohne ein genaues Ausrichten im Hinblick auf die jeweilige Drehwinkellage und die jeweilige elektrische Leiterbahn. Um allerdings einen unerwünschten Kontakt einer Leiterbahn mit einer der ringförmigen Kontaktflächen 37 zu vermeiden, kann die jeweilige Leiterbahn auf Höhe der jeweiligen ringförmigen Kontaktfläche 37 mit einer Isolationsschicht abgedeckt sein, wie es in Fig. 5 beispielhaft anhand einer Anordnung von kreisförmigen Isolationsschichten oder -pads 38 auf der elektrischen Leiterbahn 31 schematisch dargestellt ist.

Gemäß dem Ausführungsbeispiel von Fig. 5 wird der Umhüllungsstreifen 30 von einer nicht dargestellten Bobine abgezogen, welche Bandmaterial mit einer Breite entsprechend der einfachen oder mehrfachen Länge einer elektronischen Zigarette 2 enthält. Das Bandmaterial wird in diskrete Umhüllungsstreifen 30 zerteilt, deren Breite dem Umfang einer elektronischen Zigarette 2 zuzüglich einer eventuellen Überlappung entspricht. Das Bandmaterial besteht bevorzugt aus Papier oder Folie. Das Bandmaterial kann auch eine geringere Breite als die Länge der elektronischen Zigarette 2 aufweisen, wonach der Umhüllungsstreifen 30 von einem der Abschnitte 2a bis 2d in längsaxialer Richtung überragt wird.

Bevorzugt werden die so konfektionierten Umhüllungsstreifen 30 mit elektrisch leitendem Klebermittel zur Bildung der elektrischen Leiterbahnen 31, 32 versehen. Hierfür ist zweckmäßigerweise auf dem Weg von der Bobine zu einer in den Figuren ebenfalls nicht dargestellten Rolleinrichtung oder in einer solchen Rolleinrichtung eine ebenfalls nicht dargestellte Beleimstation zum Auftragen des erwähnten elektrisch leitenden Klebemittels vorgesehen. Das Auftragen des elektrisch leitenden Klebemittels kann mit einer Düse, einer Leimscheibe und/oder einer Leimwalze erfolgen. Je nach herzustellendem Kontakt oder zu vermeidender elektrischer Verbindungsstelle kann eine Düse, eine Leimscheibe und/oder eine Leimwalze zum Auftragen einer Isolationsschicht vorgesehen sein, und zwar insbesondere einer Isolationsschicht aus isolierendem Klebemittel und/oder in Form einer Abdecklage, welche auf dem gewünschten Abschnitt einer Leiterbahn aufgebracht wird, wie es im Fall von Fig. 5 mit den kreisförmigen Isolierschichten 38 auf der elektrischen Leiterbahn 31 der Fall ist. Die Abdecklage kann auch rechteckförmig sein.

Alternativ kann die Bobine zur Bereitstellung des Umhüllungsstreifens 30 auch vorkonfektioniertes Bandmaterial enthalten, welches bereits Leiterbahnen trägt. Hierzu kann mindestens eine gewünschte Isolationsschicht bereits ebenfalls vorkonfektioniert sein. In einem solchen Fall kann die Verwendung der zuvor beschriebenen Beleimstation entfallen.

Zu dem in Fig. 5 dargestellten zylinderförmigen Körper 40 ist noch anzumerken, dass dieser eine Transportrolle oder -walze symbolisiert, die Bestandteil der zuvor angesprochenen Rolleinrichtung ist und zu deren Drehachse B die Längsachse A der für die Bildung der elektronischen Zigarette 2 vorgesehenen stabförmigen Anordnung im Wesentlichen parallel ausgerichtet ist. Wie Fig. 5 ferner erkennen lässt, ist der Umhüllungsstreifen 30 ferner so ausgerichtet, dass sich die von ihm aufgespannte Ebene im Wesentlichen parallel zur Längsachse A erstreckt und mit seinem vorlaufenden Langseitenrand 30a die stabförmige Anordnung an ihrem Umfang etwa tangential trifft.

Die Verwendung von elektrisch leitendem Klebemittel zur Bildung von elektrischen Leiterbahnen 31, 32 hat den Vorteil, dass die Bestandteile der elektronischen Zigarette 2 in beliebig gestaltbaren elektrisch leitenden Kontakt zueinander gebracht und gleichzeitig fixiert werden können. Wird beispielsweise eine Leiterbahn an den Rand des Umhüllungsstreifens 30 gelegt und entsprechend breit dimensioniert, kann beim Schließen des Umhüllungsstreifens 30 in seinem Überlappungsbereich gleichzeitig eine sich innenseitig des dann geschlossenen Umhüllungsstreifens 30 erstreckende elektrische Leitung zur Verfügung gestellt werden.

Hinsichtlich der Herstellung einer aus den Abschnitten bestehenden stabförmigen Anordnung zur Bildung einer elektronischen Zigarette 2 sei noch folgendes angemerkt:
Soweit erforderlich, kann eine in den Figuren ebenfalls nicht dargestellte Ausrichteinheit vorgesehen sein, welche die Batterie 6 und/oder die als Verbraucher vorgesehenen elektronischen Funktionseinheiten 8, 10, 12 und 22 in ihrer radialen Orientierung ausrichtet, um den gewünschten Kontakt mit den Leiterbahnen 31 bis 33 zu gewährleisten. Eine solche Ausrichteinheit kann beispielsweise durch eine Verdreheinrichtung realisiert sein, welche bevorzugt eine oder mehrere Drehwalzen oder ein umlaufendes Band oder mehrere umlaufende Bänder aufweist, welche unter Reibschluss die Batterie 6 und/oder mindestens eine der elektronischen Funktionseinheiten 8, 10, 12 und 22 im Uhrzeigersinn oder entgegen des Uhrzeigersinns drehen, insbesondere bevor die Umhüllung mit dem Umhüllungsstreifen 30 stattfindet.

Die Fertigung der elektronischen Zigarette 2 kann bevorzugt in einem Strangverfahren stattfinden, indem zunächst ein fortlaufender Strang erzeugt, wird, welcher anschließend geteilt werden kann, wonach einzelne elektronische Zigaretten 2 entstehen. Ein Schnitt des Stranges kann in einen doppeltlangen Filter- bzw. Mundstückabschnitt gelegt werden, so dass der einfachlange Mundstück- bzw. Filterabschnitt dann das Mundstück der elektronischen Zigarette 2 bildet. Alternativ oder zusätzlich kann ein Schnitt des Stranges auch in einen doppeltlangen Leuchtdiodenabschnitt gelegt werden, wobei der einfachlange Leuchtdiodenabschnitt das dem Mundstück abgewandte Ende der elektronischen Zigarette bildet, wie anhand der Bezugszeichen "20" und "22" in Fig. 1 erkennbar ist. Der doppeltlange Leuchtdiodenabschnitt ist vorteilhaft durch zwei voneinander beabstandete, gemeinsam umfangsseitig umhüllte Leuchtdiodenabschnitte gebildet, zwischen denen in axialer Richtung ein Hohlraum bevorzugt mit einer axialen Erstreckung von 1,5 bis 5 mm, besonders bevorzugt von 1,8 bis 4 mm, vorgesehen ist, durch den ein Schnitt stattfinden kann, um jegliche Beschädigung der Leuchtdioden zu vermeiden. Die Leuchtdiodenabschnitte bzw. - enden sind bei einer elektronischen Zigarette häufig zum Simulieren einer 'brennenden' konventionellen Zigarette erwünscht; sie können aber auch zum Anzeigen des Betriebes der elektronischen Zigarette vorteilhaft genutzt werden. Mit der Bildung eines Hohlraumes zwischen zwei gleichen oder unterschiedlichen Abschnitten lassen sich auch andere, dem Mundstück gegenüber liegende freie Enden einer elektronischen Zigaretten in einem Strangverfahren realisieren. Das Beabstanden ist auch vorteilhaft, wenn zwei oder mehrere Verdampfereinheiten und/oder Heizeinheiten und/oder Vorratsspeicher verarbeitet werden.

## Patentansprüche

1. Rauchprodukt mit einer elektrischen Energiequelle (6), mindestens einer elektrischen Funktionseinheit (8, 10, 12, 22) und einem Gehäuse (30), das gemeinsam die elektrische Energiequelle (6) und die mindestens eine elektrische Funktionseinheit (8, 10, 12, 22) zumindest teilweise umgibt,
wobei das Gehäuse (30) elektrische Leiterbahnen (31, 32, 33) zum elektrischen Anschluss der elektrischen Energiequelle (6) an die mindestens eine elektrische Funktionseinheit (8, 10, 12, 22) aufweist,
**dadurch gekennzeichnet, dass**
die elektrischen Leiterbahnen zumindest abschnittsweise in mindestens zwei Ebenen übereinander angeordnet und die Ebenen mithilfe von Isoliermaterial elektrisch voneinander getrennt sind, wobei auf diese Weise eine Anordnung von mehrlagig aufgebauten Leiterbahnen realisiert und entsprechend der Ausbildung von elektrisch isolierendem Material ein elektrischer Kontakt zwischen den Leiterbahnebenen gezielt verhindert ist.

2. Rauchprodukt nach Anspruch 1,
**dadurch gekennzeichnet, dass** es als Verbrennungsrauchprodukt mit einem Filter ausgebildet ist und dass die elektrische Energiequelle und die mindestens eine elektrische Funktionseinheit innerhalb des Filters angeordnet ist und das Gehäuse den Filter zumindest teilweise im Bereich der elektrischen Energiequelle und der mindestens einen elektrischen Funktionseinheit umgibt.

3. Rauchprodukt nach Anspruch 1**dadurch gekennzeichnet, dass** es als elektrisches Rauchprodukt (2) ausgebildet ist und elektrische Funktionseinheiten aufweist, die mindestens einen Verdampfer (10) mit einem zur Aufbewahrung mindestens eines Aromastoffes (18) vorgesehenen Vorratsspeicher (16) und ein Heizelement (12) umfassen, wobei das Gehäuse (30) gemeinsam die elektrische Energiequelle (6) und die elektrischen Funktionseinheiten (12, 16, 18) zumindest teilweise umgibt,
wobei das Gehäuse (30) elektrische Leiterbahnen (31, 32, 33) zur zumindest teilweisen elektrischen Verbindung von elektrischen Funktionseinheiten (12, 16, 18) miteinander aufweist.

4. Rauchprodukt nach Anspruch 1, **dadurch gekennzeichnet, dass** es als elektrisches Rauchprodukt ausgebildet ist und mindestens ein Heizelement, insbesondere ein Mikroheizelement, als mindestens eine elektrische Funktionseinheit sowie mindestens ein unter Wärmeeinwirkung Aromastoffe abgebendes Aromastoffelement, das bevorzugt als Aromastoffe enthaltende Mikrokapsel ausgebildet ist, und eine im Gehäuse vorgesehene Verdampfungskammer, in der das Heizelement Aromastoffe aus dem Aromastoffelement verdampft, aufweist,
wobei am Gehäuse das Heizelement und das Aromastoffelement angeordnet sind.

5. Rauchprodukt nach Anspruch 4, **dadurch gekennzeichnet, dass** das Heizelement und das Aromastoffelement am Gehäuse übereinander angeordnet und dabei von einer thermischen Isolierlage voneinander getrennt sind.

6. Rauchprodukt nach Anspruch 4 oder 5, **dadurch gekennzeichnet, dass** das mindestens eine Heizelement auf den elektrischen Leiterbahnen angeordnet ist.

7. Rauchprodukt nach einem der Ansprüche 4 bis 6, **dadurch gekennzeichnet, dass** das Gehäuse eine, vorzugsweise streifenförmige, flexible Umhüllungslage bildet, die zumindest die elektrische Energiequelle umgibt, und das Heizelement und/oder das Aromastoffelement auf der Umhüllungslage aufgedruckt ist.

8. Rauchprodukt nach einem der Ansprüche 1 bis 3,
**dadurch gekennzeichnet, dass** das Gehäuse eine, vorzugsweise streifenförmige, flexible Umhüllungslage (30) bildet, die zumindest die elektrische Energiequelle (6) umgibt.

9. Rauchprodukt nach Anspruch 7 oder 8, **dadurch gekennzeichnet, dass** die Umhüllungslage (30) gemeinsam die Anordnung aus elektrischer Energiequelle (6) und der mindestens einen elektrischen Funktionseinheit (8, 10, 12, 22) umgibt.

10. Rauchprodukt nach einem der Ansprüche 7 bis 9, **dadurch gekennzeichnet, dass** die Umhüllungslage (30) von zwei sich gegenüberliegenden Längsseitenrändern (30a, 30b) begrenzt wird, die zur Bildung einer geschlossenen Umhüllung miteinander verbunden, vorzugsweise verklebt oder verschweißt, sind.

11. Rauchprodukt nach einem der Ansprüche 7 bis 10, **dadurch gekennzeichnet, dass** die Umhüllungslage (30) Papier und/oder Kunststofffolie aufweist.

12. Rauchprodukt nach einem der vorangegangenen Ansprüche, **dadurch gekennzeichnet, dass** die elektrischen Leiterbahnen (31, 32, 33) zumindest abschnittsweise innerhalb des Gehäuses (30) angeordnet sind, insbesondere einer sich in axialer Längsrichtung des Gehäuses erstreckenden Gehäusewandung.

13. Rauchprodukt nach einem der vorangegangenen Ansprüche, **dadurch gekennzeichnet, dass** die elektrischen Leiterbahnen (31, 32, 33) zumindest abschnittsweise an der Innenseite des Gehäuses (30) freiliegen.

14. Rauchprodukt nach Anspruch 5, **dadurch gekennzeichnet, dass** mindestens eine Funktionseinheit an ihrer Außenseite elektrische Kontaktelemente aufweist und die elektrischen Leiterbahnen (31, 32, 33) zumindest an denjenigen Stellen (31a, 32a, 33a) freiliegen, an denen die elektrischen Kontaktelemente an der mindestens einen Funktionseinheit die elektrischen Leiterbahnen (31, 32, 33) berühren.

15. Rauchprodukt nach einem der vorangegangenen Ansprüche, **dadurch gekennzeichnet, dass** das Gehäuse (30) zumindest im Bereich der elektrischen Leiterbahnen (31, 32, 33) elektrisch isolierendes Material aufweist.

16. Rauchprodukt nach einem der vorangegangenen Ansprüche, **dadurch gekennzeichnet, dass** die elektrischen Leiterbahnen (31, 32, 33) zumindest teilweise mit elektrisch isolierendem Klebstoff an dem Gehäuse befestigt sind, insbesondere an der Innenseite des Gehäuses.

17. Rauchprodukt nach einem der vorangegangenen Ansprüche, mit einer im Wesentlichen länglichen, insbesondere zylindrischen, Form,
**dadurch gekennzeichnet, dass** die elektrischen Leiterbahnen (31, 32, 33) im Wesentlichen in Längsrichtung des Rauchproduktes (2) verlaufen oder zumindest sich im Wesentlichen in Längsrichtung des Rauchproduktes (2) erstreckende Abschnitte aufweisen.

18. Rauchprodukt nach einem der vorangegangenen Ansprüche, **dadurch gekennzeichnet, dass** das Gehäuse zusätzlich noch mindestens ein elektronisches Bauelement aufweist.

19. Rauchprodukt nach einem der vorangegangenen Ansprüche, bei welchem die mindestens eine elektrische Funktionseinheit über eine elektrische Schalteinrichtung (34) an der elektrischen Energiequelle angeschlossen ist, **dadurch gekennzeichnet, dass** das Gehäuse mit der elektrischen Schalteinrichtung versehen und die elektrische Schalteinrichtung (34) in die mindestens eine elektrische Leiterbahn (31, 32) eingesetzt ist.

20. Rauchprodukt nach Anspruch 19,
**dadurch gekennzeichnet, dass** die elektrische Schalteinrichtung einen druckempfindlichen Schalter aufweist, der, insbesondere für eine Erstinbetriebnahme des Rauchproduktes, bei Druckbeaufschlagung von außen schließt.

21. Verwendung eines elektrisch leitenden Klebemittels bei der Herstellung eines Rauchproduktes nach einem der Ansprüche 1 bis 20, oder bei der Herstellung eines Rauchproduktes mit einer elektrischen Energiequelle (6), mindestens einer elektrischen Funktionseinheit (8, 10 12, 22) und einem gemeinsam die elektrische Energiequelle (6) und die mindestens eine elektrische Funktionseinheit (8, 10, 12, 22) zumindest teilweise umgebenden Gehäuse (30), zur Bildung mindestens einer elektrischen Leiterbahn (31, 32, 33) für einen elektrischen Anschluss der elektrischen Energiequelle (6) an die mindestens eine elektrische Funktionseinheit (8, 10, 12, 22), bevorzugt an der Innenseite des Gehäuses (30).

## Claims

1. Smoking product with an electric power source (6), at least one electric functional unit (8, 10, 12, 22) and a housing (30), which at least partially collectively surrounds the electric power source (6) and the at least one electric functional unit (8, 10, 12, 22), wherein the housing (30) comprises electrical strip conductors (31, 32, 33) for the electrical connection of the electric power source (6) to the at least one electric functional unit (8, 10, 12, 22), **characterised in that**, at least in sections, the electrical strip conductors are arranged in at least two planes one above the other and the planes are electrically separated from one another by means of insulating material, whereby in this way an arrangement of multi-layered strip conductors is realized and according to the provision of electrically insulating material an electrical contact between the strip conductor planes is specifically prevented.

2. Smoking product according to Claim 1, **characterised in that** said smoking product is designed as a combustion smoking product with a filter and that the electric power source and the at least one electric functional unit is disposed within the filter and the housing at least partially surrounds the filter in the region of the electric power source and the at least one electric functional unit.

3. Smoking product according to Claim 1, **characterised in that** said smoking product is designed as an electric smoking product (2) and comprises electric functional units, which include at least one vaporiser (10), with a storage reservoir (16) provided for the storage of at least one flavouring substance (18), and a heating element (12), wherein the housing (30) at least partially collectively surrounds the electric power source (6) and the electric functional units (12, 16, 18), wherein the housing (30) comprises electrical strip conductors (31, 32, 33) for the at least partial electrical connection of electric functional units (12, 16, 18) to one another.

4. Smoking product according to Claim 1, **characterised in that** said smoking product is designed as an electric smoking product and comprises at least one heating element, in particular a micro heating element, as at least one electric functional unit, and at least one flavouring substance element, which releases flavouring substances under the action of heat and is preferably configured as a flavouring substance-containing microcapsule, and a vaporisation chamber provided in the housing, in which the heating element vaporises flavouring substances out of the flavouring substance element, wherein the heating element and the flavouring substance element are disposed on the housing.

5. Smoking product according to Claim 4, **characterised in that** the heating element and the flavouring substance element are arranged one above the other on the housing and are separated from one other by means of a thermal insulating layer.

6. Smoking product according to Claim 4 or 5, **characterised in that** the at least one heating element is disposed on the electrical strip conductors.

7. Smoking product according to any of Claims 4 to 6, **characterised in that** the housing forms a, preferably strip-shaped, flexible encasing layer, which at least surrounds the electric power source, and the heating element and/or the flavouring substance element is/are imprinted on the encasing layer.

8. Smoking product according to any of Claims 1 to 3, **characterised in that** the housing forms a, preferably strip-shaped, flexible encasing layer (30), which at least surrounds the electric power source (6).

9. Smoking product according to Claim 7 or 8, **characterised in that** the encasing layer (30) collectively surrounds the arrangement of the electric power source (6) and the at least one electric functional unit (8, 10, 12, 22).

10. Smoking product according to any of Claims 7 to 9, **characterised in that** the encasing layer (30) is delimited by two opposite longitudinal side edges (30a, 30b), which are connected to one another, preferably adhesively bonded or welded, to form a closed encasement.

11. Smoking product according to any of Claims 7 to 10, **characterised in that** the encasing layer (30) comprises paper and/or plastic film.

12. Smoking product according to any of the preceding claims, **characterised in that**, at least in sections, the electrical strip conductors (31, 32, 33) are arranged within the housing (30), in particular a housing wall extending in the axial longitudinal direction of the housing.

13. Smoking product according to any of the preceding claims, **characterised in that**, at least in sections, the electrical strip conductors (31, 32, 33) are exposed on the inner side of the housing (30).

14. Smoking product according to Claim 5, **characterised in that** at least one functional unit comprises electrical contact elements on its outer side, and the electrical strip conductors (31, 32, 33) are exposed in at least those locations (31a, 32a, 33a) in which the electrical contact elements on the at least one functional unit touch the electrical strip conductors (31, 32, 33).

15. Smoking product according to any of the preceding claims, **characterised in that** the housing (30) comprises electrically insulating material at least in the region of the electrical strip conductors (31, 32, 33).

16. Smoking product according to any of the preceding claims, **characterised in that** the electrical strip conductors (31, 32, 33) are at least partially fastened to the housing, in particular on the inner side of the housing, with electrically insulating adhesive.

17. Smoking product according to any of the preceding claims, with a substantially elongated, in particular cylindrical, shape, **characterised in that** the electrical strip conductors (31, 32, 33) extend substantially in the longitudinal direction of the smoking product (2) or at least comprise sections which extend substantially in the longitudinal direction of the smoking product (2).

18. Smoking product according to any of the preceding claims, **characterised in that** the housing additionally comprises at least one electronic component.

19. Smoking product according to any of the preceding claims, in which the at least one electric functional unit is connected to the electric power source via an electrical switching device (34), **characterised in that** the housing is provided with the electrical switching device and the electrical switching device (34) is fitted into the at least one electrical strip conductor (31, 32).

20. Smoking product according to Claim 19, **characterised in that** the electrical switching device comprises a pressure-sensitive switch, which, in particular for an initial use of the smoking product, closes when pressure is applied from the outside.

21. Use of an electrically conductive adhesive in the production of a smoking product according to any of Claims 1 to 20, or in the production of a smoking product with an electric power source (6), at least one electric functional unit (8, 10, 12, 22), and a housing (30), which at least partially collectively surrounds the electric power source (6) and the at least one electric functional unit (8, 10, 12, 22), to form at least one electrical strip conductor (31, 32, 33) for an electrical connection of the electric power source (6) to the at least one electric functional unit (8, 10, 12, 22), preferably on the inner side of the housing (30).

## Revendications

1. Produit à fumer comprenant une source d'énergie électrique (6), au moins une unité fonctionnelle électrique (8, 10, 12, 22) et un boîtier (30) qui entoure, au moins partiellement, de façon conjointe, la source d'énergie électrique (6) et la au moins une unité fonctionnelle électrique (8, 10, 12, 22), dans lequel le boîtier (30) présente des pistes électriquement conductrices (31, 32, 33) pour le raccordement électrique de la source d'énergie électrique (6) à la au moins une unité fonctionnelle électrique (8, 10, 12, 22), **caractérisé en ce que** les pistes électriquement conductrices sont au moins partiellement agencées l'une au-dessus de l'autre dans au moins deux plans, et les plans sont électriquement séparés l'un de l'autre au moyen d'un matériau isolant, dans lequel un agencement de pistes conductrices constituées de plusieurs couches est réalisé de cette manière et selon la réalisation du matériau électroisolant, un contact électrique entre les plans de piste conductrice est empêché de manière ciblée.

2. Produit à fumer selon la revendication 1, **caractérisé en ce qu'**il est conçu sous la forme d'un produit de combustion à fumer pourvu d'un filtre, et **en ce que** la source d'énergie électrique et la au moins une unité fonctionnelle électrique sont agencées à l'intérieur du filtre, et le boîtier entoure le filtre au moins partiellement dans la région de la source d'énergie électrique et de la au moins une unité fonctionnelle électrique.

3. Produit à fumer selon la revendication 1, **caractérisé en ce qu'**il est conçu sous la forme d'un produit à fumer électrique (2) et présente des unités fonctionnelles électriques qui comprennent au moins un évaporateur (10) pourvu d'un réservoir de stockage (16) prévu pour stocker au moins un arôme (18), et un élément chauffant (12), dans lequel le boîtier (30) entoure, au moins partiellement, de façon conjointe, la source d'énergie électrique (6) et les unités fonctionnelles électriques (12, 16, 18), dans lequel le boîtier (30) comporte des pistes électriquement conductrices (31, 32, 33) pour le raccordement électrique au moins partiel d'unités fonctionnelles électriques ( 12, 16, 18) entre elles.

4. Produit à fumer selon la revendication 1, **caractérisé en ce qu'**il est conçu sous la forme d'un produit à fumer électrique et présente au moins un élément chauffant, en particulier un micro-élément chauffant, en tant qu'au moins une unité fonctionnelle électrique, ainsi qu'au moins un élément aromatisant libérant des arômes sous l'action de la chaleur, qui est réalisé, de préférence, sous la forme d'une microcapsule contenant des arômes, et une chambre d'évaporation prévue dans le boîtier, dans laquelle l'élément chauffant évapore des arômes libérés par l'élément aromatisant, l'élément chauffant et l'élément aromatisant étant disposés sur le boîtier.

5. Produit à fumer selon la revendication 4, **caractérisé en ce que** l'élément chauffant et l'élément aromatisant sont agencés l'un au-dessus de l'autre sur le boîtier et sont séparés l'un de l'autre par une couche d'isolant thermique.

6. Produit à fumer selon la revendication 4 ou 5, **caractérisé en ce que** le au moins un élément chauffant est agencé sur les pistes électriquement conductrices.

7. Produit à fumer selon l'une quelconque des revendications 4 à 6, **caractérisé en ce que** le boîtier forme une couche d'enveloppement souple, de préférence en forme de bande, qui entoure au moins la source d'énergie électrique, et l'élément chauffant et/ou l'élément aromatisant est imprimé sur la couche d'enveloppement.

8. Produit à fumer selon l'une quelconque des revendications 1 à 3, **caractérisé en ce que** le boîtier forme une couche d'enveloppement souple (30), de préférence en forme de bande, qui entoure au moins la source d'énergie électrique (6).

9. Produit à fumer selon la revendication 7 ou 8, **caractérisé en ce que** la couche d'enveloppement (30) entoure, de façon conjointe, l'agencement de la source d'énergie électrique (6) et de la au moins une unité fonctionnelle électrique (8, 10, 12, 22).

10. Produit à fumer selon l'une quelconque des revendications 7 à 9, **caractérisé en ce que** la couche d'enveloppement (30) est délimitée par deux bords latéraux longitudinaux opposés (30a, 30b), qui sont reliés entre eux pour former une enveloppe fermée, de préférence collée ou soudée.

11. Produit à fumer selon l'une quelconque des revendications 7 à 10, **caractérisé en ce que** la couche d'enveloppement (30) comprend du papier et/ou un film plastique.

12. Produit à fumer selon l'une quelconque des revendications précédentes, **caractérisé en ce que** les pistes électriquement conductrices (31, 32, 33) sont agencées au moins partiellement à l'intérieur du boîtier (30), en particulier d'une paroi de boîtier s'étendant dans la direction longitudinale axiale du boîtier.

13. Produit à fumer selon l'une quelconque des revendications précédentes, **caractérisé en ce que** les pistes électriquement conductrices (31, 32, 33) sont au moins partiellement exposées sur la face interne du boîtier (30).

14. Produit à fumer selon la revendication 5, **caractérisé en ce qu'**au moins une unité fonctionnelle présente, sur son côté extérieur, des éléments de contact électriques, et les pistes électriquement conductrices (31, 32, 33) sont exposées au moins au niveau de ces emplacements (3 la, 32a, 33a) où les éléments de contact électriques sont en contact avec les pistes électriquement conductrices (31, 32, 33) au niveau de la au moins une unité fonctionnelle.

15. Produit à fumer selon l'une quelconque des revendications précédentes, **caractérisé en ce que** le boîtier (30) présente un matériau électriquement isolant au moins dans la région des pistes électriquement conductrices (31, 32, 33).

16. Produit à fumer selon l'une quelconque des revendications précédentes, **caractérisé en ce que** les pistes électriquement conductrices (31, 32, 33) sont au moins partiellement fixées au moyen d'adhésif électriquement isolant sur le boîtier, en particulier sur la face interne du boîtier.

17. Produit à fumer selon l'une quelconque des revendications précédentes, ayant une forme sensiblement allongée, en particulier cylindrique, **caractérisé en ce que** les pistes conductrices électriques (31, 32, 33) s'étendent sensiblement dans la direction longitudinale du produit à fumer (2) ou ont au moins des sections s'étendant sensiblement dans la direction longitudinale du produit à fumer (2).

18. Produit à fumer selon l'une quelconque des revendications précédentes, **caractérisé en ce que** le boîtier comporte, en outre, au moins un composant électronique.

19. Produit à fumer selon l'une quelconque des revendications précédentes, dans lequel la au moins une unité fonctionnelle électrique est reliée à la source d'énergie électrique par l'intermédiaire d'un dispositif de commutation électrique (34),
**caractérisé en ce que** le boîtier est muni du dispositif de commutation électrique, et le dispositif de commutation électrique (34) est inséré dans la au moins une piste électriquement conductrice (31, 32).

20. Produit à fumer selon la revendication 19, **caractérisé en ce que** le dispositif de commutation électrique comprend un commutateur sensible à la pression qui, en particulier pour une première mise en service du produit à fumer, se ferme en cas de sollicitation à la pression de l'extérieur.

21. Utilisation d'un adhésif électriquement conducteur dans la fabrication d'un produit à fumer selon l'une quelconque des revendications 1 à 20, ou dans la fabrication d'un produit à fumer ayant une source d'énergie électrique (6), au moins une unité fonctionnelle électrique (8, 10 12, 22) et un boîtier (30) qui entoure au moins partiellement, de façon conjointe, la source d'énergie électrique (6) et la au moins une unité fonctionnelle électrique (8, 10, 12, 22), pour former au moins une piste électriquement conductrice (31, 32, 33) pour un raccordement électrique de la source d'énergie électrique (6) à la au moins une unité fonctionnelle électrique (8, 10, 12, 22), de préférence sur la face interne du boîtier (30).
